# EUROPÄISCHE PATENTANMELDUNG

(11) **EP 0 841 535 A2**
(43) Veröffentlichungstag der Anmeldung: **13.05.1998**
(21) Anmeldenummer: 97250337.9
(22) Anmeldetag: 12.11.1997
(51) Int. Cl.: G01C 15/00

(54) **Verfahren und Vorrichtung zur Flächen- und Raumvermessung**

(30) Priorität: 12.11.1996 DE 19648626
(71) Anmelder: FlexiCon GmbH, 12439 Berlin (DE)
(72) Erfinder: Weide, Hans-Günter, 12623 Berlin (DE); Schikora, Fred, 61118 Bad Vilbel (DE)
(74) Vertreter: Hengelhaupt, Jürgen, Dipl.-Ing.

(57) **Zusammenfassung**

Die Erfindung beschreibt ein Verfahren und eine Vorrichtung zur Flächen- und Raumvermessung und ist anwendbar insbesondere zur Erfüllung von Vermessungsaufgaben für die Gebäudeverwaltung.
Das Meßverfahren beruht darauf, daß von einer zentralen Stelle im zu vermessenden Raum alle zu erfassenden Raum- und/oder Flächeneckpunkte mit einem Laserstrahl anvisiert und beaufschlagt werden, von dem jeweils reflektierten Laserstrahl aus der Entfernung und den Winkeln die 3D-Werte ermittelt und eine maßstabsgerechte Zeichnung erstellt wird.
Die erfindungsgemäße Vorrichtung ist dadurch gekennzeichnet, daß auf einem Stativ (1) der Laserentfernungsmesser (3), bestehend aus Lasersender und Laserempfänger, eine Kipp- und Dreheinrichtung (6) zur Ausrichtung und Winkelmessung für Hoch- und Rechstwert, eine elektronische Auswerteeinheit (2) zur Winkeldaten- und Entfernungsdatenerfassung- und übergabe und mindestens ein damit verbundener Computer (4) sowie ein Zielfernrohr (5) angeordnet ist.

## Beschreibung

Die Erfindung betrifft ein Verfahren und eine Vorrichtung zur Flächen- und Raumvermessung und ist anwendbar insbesondere zur Erfüllung von Vermessungsaufgaben für die Gebäudeverwaltung.

Mit der Einführung rechnergestützter Gebäudeverwaltungssysteme wird der Bedarf nach aktualisierten Parametern über Flächen und Volumen von Räumen, Anzahl und Größe der Fenster und Türen, Ausdehnung der Flure und anderes immer größer. Da die ursprünglichen Baupläne in der Regel durch zwischenzeitliche bauliche Veränderungen nicht mehr aktuell sind, müssen in Größenordnungen Neuvermessungen der Räume und Gebäude vorgenommen werden. Neben der klassischen Vermessungstechnik mit Zollstock und Metermaß werden in letzter Zeit bereits berührungslose Laserentfernungsmesser mit Rechneranschluß eingesetzt, die es gestatten, die Entfernung der Wände eines Raumes bis ca. 30 Meter mit ausreichender Genauigkeit zu bestimmen. Die Meßwerte können dann in einem mitgeführten Rechner, in dem mittels CAD eine Zeichnung des Raumes vorliegt, eingetragen werden. Mit diesem Gerätesystem lassen sich relativ einfach der Abstand der Wände und die Raumhöhe vermessen. Nachteilig bei dieser Lösung ist der relativ hohe Preis. Flächenhaft ausgedehnte Objekte wie Fenster und Türen bzw. Mauerdurchbrüche lassen sich mit diesem Verfahren ohne zusätzliche Hilfsmittel nicht bestimmen. Werden jedoch Hilfsmittel wie Reflexmarken oder Meßlatten eingesetzt, wird zusätzlich ein zweiter Mitarbeiter benötigt, was die Kosten des Meßverfahrens noch weiter verteuert. Die Darstellung des Meßergebnisses als maßstäbliche CAD-Zeichnung hat im Gegensatz zur früheren Vermessungspraxis, bei der eine unmaßstäbliche Handskizze angefertigt wurde, einige Nachteile. Es können in der Regel die Meßergebnisse nur aufgezoomt gesehen werden, wobei jedoch der Zusammenhang der Zeichnung aufgrund des begrenzten Bildfeldes des Rechners verlorengeht. Nur in einer nichtmaßstäblichen Skizze lassen sich sowohl die Zahlen als auch der Meßzusammenhang auf einem relativ kleinen Bildschirm eines beigestellten Rechners in Übereinstimmung bringen.
Bei einem weiteren bekannten Meßkomplex ist der Entfernungsmeßlaser auf einem Digitaltachymeter installiert und mißt parallel zur Optik des Theodoliten. Dieses System hat gegenüber einfachen Lösungen den besonderen Vorteil, daß es mitten im Raum aufgestellt werden kann und von einem Punkt aus alle Meßpunkte des Raumes, die in direkter Sicht einsehbar sind, ausmessen kann. Der Fehler, der durch die Parallelverschiebung des Lasermeßstrahls zur optischen Achse entsteht, ist bei geschickter Meßtechnologie durch einen Fachmann vernachlässigbar. Durch den angekoppelten Rechner mit der entsprechenden Software lassen sich die CAD-Zeichnungen der Räumlichkeiten vermaßen. Der Preis dieses Meßkomplexes ist jedoch ebenfalls relativ hoch.

Der Erfindung liegt daher die Aufgabe zugrunde, ein Verfahren und eine Vorrichtung zur Flächen- und Raumvermessung zu schaffen, wobei das Verfahren eine genaue und reproduzierbare Erfassung sowie Weiterverarbeitung der Raum- bzw. Flächeneckpunkte gestattet und die Vorrichtung einfach und preiswert herstellbar sowie leicht zu bedienen und zu warten ist.

Diese Aufgabe wird erfindungsgemäß gelöst durch die Merkmale im kennzeichnenden Teil der Ansprüche 1 und 8 in Verbindung mit den Merkmalen im jeweiligen Oberbegriff.
Zweckmäßige Ausgestaltungen der Erfindung sind in den Unteransprüchen enthalten.

Ein besonderer Vorteil der Erfindung liegt in der neuartigen Kombination von Tachymeterfunktion, Laserentfernungsmeßprinzip und rechentechnischer Datenverarbeitung, wobei von einer zentralen Stelle im zu vermessenden Raum alle zu erfassenden Raum- und/oder Flächeneckpunkte mit einem Laserstrahl anvisiert und beaufschlagt werden, von dem jeweils reflektierten Laserstrahl aus der Entfernung und den Winkeln die 3D-Werte ermittelt und eine maßstabgerechte Zeichnung erstellt wird.
Ein weiterer Vorteil zur Verbesserung der Übersichtlichkeit resultiert daraus, daß vorab eine nichtmaßstäbliche Skizze mit den zu erfassenden Raum- und/oder Flächeneckpunkten erstellt wird und die Raum- und/oder Flächeneckpunkte nach dem Vermessen mit dem Laserstrahl und der Ermittlung und Speicherung der zugehörigen 3D-Werte eine andere Farbkennung erhalten. Das Anvisieren kann direkt mit dem menschlichen Auge oder indirekt über ein Zielfernrohr erfolgen.

Eine preiswerte Herstellung der Vorrichtung sowie eine einfache Einmannbedienung wird dadurch gewährleistet, daß auf einem Stativ der Laserentfernungsmesser, bestehend aus Lasersender und Laserempfänger mit einer Winkelmeßeinrichtung, eine elektronische Auswerteeinheit mit Schnittstelle sowie ein Zielfernrohr angeordnet ist.

Ein berührungsloser Laserentfernungsmesser wird statt der Meßoptik in ein Tachymeter eingebaut. Der Laser ist wie die Optik schwenkbar und seine Lage bezüglich Rechts- und Hochwert wird über die Tachymeterausgabe angegeben. Der Laserentfernungsmesser stellt die gemessene Entfernung an einer Schnittstelle zur Verfügung.

Da der Laserentfernungsmesser für das menschliche Auge einen Dauerstrichlaser darstellt, kann der Meßpunkt an der gegenüberliegenden Wand bzw. dem zu messenden Objekt mit dem Auge verfolgt werden. Für größere Entfernungen, wo ein Laserfleck mit 5 mm Durchmesser nicht mehr mit bloßem Auge zu erkennen ist, hilft ein auf dem Entfernungsmesser parallel montiertes Zielfernrohr, die genaue Lage des Lasermeßpunktes zu ermitteln.

Der Bediener ist so in der Lage, alle Raumpunkte mit Hilfe des Laserflecks anzuziehlen und nach ausgelöster Messung die 3D-Werte für jeden Raumpunkt automatisch berechnen zu können. Der Aufstellungsort des Vermessungsgerätes muß dabei so gewählt werden, daß möglichst alle Raumeckpunkte vom Standpunkt des Systems eingesehen werden können. Im verbundenen Steuerrechner läßt sich mit Hilfe einer Spezialsoftware in einfacher Weise eine Raumskizze zeichnen, in der die jeweiligen Meßwerte den Eckpunkten der Skizze, umgerechnet auf Absolutgrößen, zugeordnet werden. In einem Rechnerlauf lassen sich in einfacher Weise sofort die Originalabmessungen der jeweiligen Raumparameter ermitteln. Für Fenster und Türen reichen in der Regel zwei Meßpunkte, zum Beispiel links oben und rechts unten, so daß sofort deren Fläche ermittelt werden kann. Über eine im Rechner vorbereitete Datenbank können alle gemessenen Objekte und Kanten im Raum attributiert werden. Vorbereitete Fenster- und Türformen sowie Innen- oder Außenwände können durch vorbereitete Dateien in der Datenbank den jeweiligen Skizzenobjekten zugeordnet werden.

Während in der ersten Etappe eine einfache Handskizze von dem zu vermessenden Raum angefertigt wird, die zur Kontrolle des jeweiligen Meßablaufs dient, kann in der zweiten Etappe nach Vorliegen aller 3D-Meßwerte eine maßstabsgerechte Zeichnung im Rechner automatisch entworfen werden. Hierbei kann dann in einfacher Weise festgestellt werden, ob irgendwelche Meßfehler vorliegen, die dann vor Ort noch korrigierbar sind.

In der dritten Phase ist vorgesehen, die Skizze bzw. Zeichnung in ein professionelles CAD-System zu übergeben und hier maßstäbliche Zeichnungen zu generieren. Dabei können für die jeweiligen eingetragenen Beschreibungen in der Datenbank entsprechende Symbole generiert werden, so daß in der dann entstehenden Zeichnung nicht nur die Maßstäbe und Abstände stimmen, sondern auch Elemente wie Türen, Fenster, Außen- und Innenwände in der richtigen zeichnerischen Darstellung von Meßpunkt zu Meßpunkt gezeigt werden.

Durch den extrem einfachen Aufbau des Meßgerätes und die Verwendung handelsüblicher Notebooks als Begleitrechner wird die Gesamtlösung sehr kostengünstig. Der Rationalisierungseffekt des geplanten Vermessungskomplexes erwächst aus der Zusammenführung der Vorzüge von bisher eingesetzten Teil- und Einzellösungen. Die Handhabung des Vermessungssystems ist so einfach gestaltet, daß eingewiesene Facharbeiter durchaus in der Lage sind, die Vermessung durchzuführen.

Die Erfindung soll nachstehend anhand von Ausführungsbeispielen näher erläutert werden. Es zeigen:

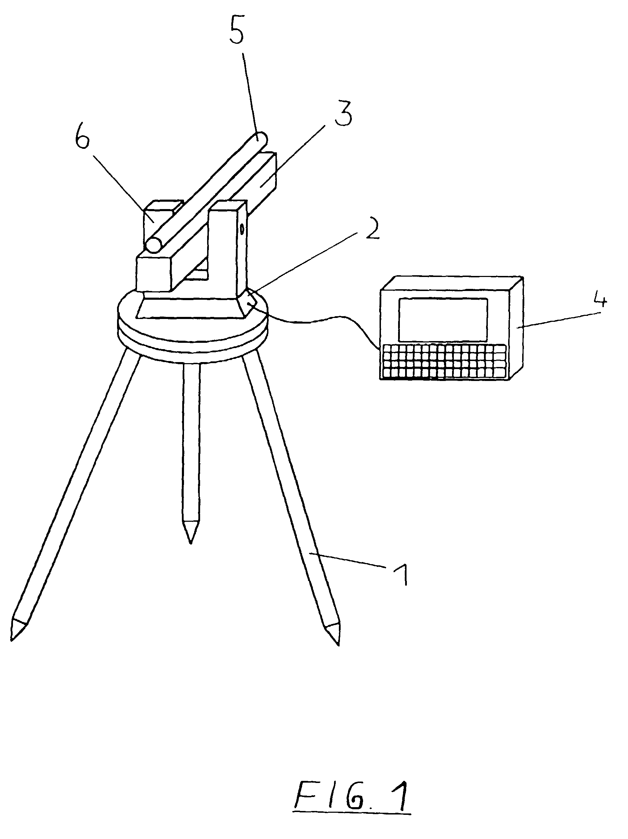

- Fig. 1: Eine schematische Darstellung der Flächen- und Raumvermessungsvorrichtung.

Wie aus Fig. 1 zu ersehen ist, ist auf einem Stativ 1 für optische Meßgeräte eine Kipp- und Dreheinrichtung 6 angebracht, in der der Laserentfernungsmesser 3 mit dem Fernrohr 5 so eingebaut ist, daß er durch Drehen und Kippen alle sichtbaren Punkte in seiner Umgebung anzielen kann. Die Kipp- und Dreheinrichtung 6 ist so gestaltet, daß sie die durch Kippen und Drehen erzeugten Winkel messen und an ihre integrierte Recheneinheit 2 übergeben kann. Diese übergibt über eine Schnittstelle die Daten an den als Feldrechner/Notebook oder Penbook ausgebildeten Computer 4, der zur Auswertung eingerichtet ist.

Mit der erfindungsgemäßen Lösung geht nun die Vermessung eines Raumes so vor sich, daß das Gerät an eine Stelle des Raumes gestellt wird, von wo möglichst alle interessierenden Raumpunkte direkt einsehbar sind.

Als erstes wird eine Bezugswand ermittelt, in der Regel die Außenwand eines Gebäudes, an der durch Messung von zwei horizontal liegenden Punkten das Koordinatensystem für die Raummessung festgelegt wird. Die Messung eines Raumpunktes erfolgt durch Ausrichtung des Lasers des Laserentfernungsmessers 3, dessen Lasermeßstrahl als Dauerstrichlaser angesehen werden kann und sichtbar ist, auf den zu messenden Punkt. Die Genauigkeit der Ausrichtung kann bei größerer Entfernung mit Hilfe des parallel zum Laser installierten Fernrohrs 5 kontrolliert werden. Liegt der Meßfleck des Lasers auf dem richtigen geometrischen Punkt des zu messenden Objektes (Fenster, Tür, Raumvorsprung, Raumecke), wird durch Auslösen der Entfernungsmessung sowohl die Entfernung als auch die Winkellage, bezogen auf die vorherige Ausrichtung des Systems, ermittelt, zwischengespeichert und über eine Schnittstelle dem Computer 4 zur Auswertung übergeben. Auf dem Computer 4 ist vor der Messung eine unmaßstäbliche Skizze des Raumes in einfacher Weise erzeugt worden. Wird dazu vorzugsweise ein Pencomputer benutzt, kann die Raumskizze mit Hilfe des Stiftes direkt auf das Display skizziert werden. Der zu vermessende Raumpunkt wird auf dieser Skizze markiert. Nach der Messung über das Gerät werden die Daten an den Computer 4 übergeben und der markierte Raumpunkt wird durch Anderung der Farbe dahingehend gekennzeichnet, daß im Speicher die Koordinaten für diesen Punkt abgelegt sind. Entsprechend dem Meßplan bzw. der Skizze auf dem Display des Computer 4 werden in der gleichen Weise die zu messenden Punkte markiert und durch das Gerät vermessen. Sind alle zu messenden Raumpunkte vermessen, d.h. sie haben alle die Vermessungsfarbe, ist für den Bediener sofort ersichtlich, welche Punkte evtl. vergessen wurden. In die Skizze können auch nachträglich Meßpunkte eingefügt werden, wie z.B. Fenster oder Türen oder andere interessierende Objekte wie Steckdosen, Leitungen, Heizkörper usw. Bei der Vermessung ist es möglich, vor Ort die Objekte, wie z.B. Außenwand, Innenwand, tragende Innenwand, Fenster und Türen über eine im Computer zur Verfügung gestellte Symbolbibliothek zu attributieren und Standardgrößen zu berücksichtigen Mit Hilfe dieser Attribute können in die Skizze bzw. später bei Übergabe an ein Cad-System automatisch Symbole in die Zeichnung maßstabsgerecht eingefügt werden. Die Attributierung erfolgt wahlweise, d.h. es muß nicht unbedingt ein Objekt mit Attributen versehen werden. Sie können dann jedoch auch nicht auf der Zeichnung automatisch generiert werden.

Ist die Messung nach diesem System eines Raumes abgeschlossen, besteht die Möglichkeit sich die unmaßstäbliche Skizze automatisch darstellen zu lassen. In der Regel gehen bei der maßstäblichen Darstellung die Details wegen der begrenzten Bildgröße des Rechners verloren, es kann aber in sehr einfacher Weise festgestellt werden, ob bei den Raumpunkten Meßfehler aufgetreten sind. Das zeigt sich z.B. bei Darstellung eines schiefwinkligen Raumes (bei maßstäblicher Darstellung), wo sofort gesehen werden kann, welcher Raumpunkt zur Korrektur nachgemessen werden muß, wenn der Raum nicht tatsächlich schiefwinklig ist. Nach dieser einfachen Kontrolle, die jedoch auch weggelassen werden kann, läßt sich die Raumzeichnung an ein beliebiges CAD-System übergeben. Im CAD-System wird die Zeichnung maßstäblich mit den realen zeichnerisch dargestellten Attributen wie Symbole für Fenster, Türen, Außenwände usw. generiert und hergestellt.

In einem weiteren Ausführungsbeispiel soll der Feldeinsatz des Gerätes beschrieben werden. Sind im Feldeinsatz Objekte zu messen, die weiter als die reflektorlose Meßlänge des Lasermeßgerätes entfernt sind, müssen hier in klassischer Weise Reflektoren eingesetzt werden. Auch in diesem Fall wird von dem zu vermessenden Objekt auf dem Computer 4 eine Skizze des Meßobjektes angefertigt, wo die beabsichtigten Meßpunkte festgelegt werden. Die Meßpunkte können nun, wenn sie in der richtigen Meßentfernung liegen, direkt angezielt werden oder ein Helfer muß mit dem Reflektor in klassischer Weise die Meßpunkte mit der Meßlatte anstechen, und es wird die Entfernung des Reflektors auf der Meßlatte vermessen, dessen Höhe über dem Erdboden bekannt ist. Auf dieser Art und Weise werden alle zu vermessenden Feldpunkte mit Winkel und Entfernung registriert und an den Computer 4 übergeben. Für alle Feldmeßpunkte, deren Meßwerte übergeben wurden, ändert sich wie im ersten Beispiel die Farbe auf der Darstellung, so daß eine einfache Kontrolle über die bereits vermessenden Punkte besteht. Auch hier können nachträglich Meßpunkte in die Skizze aufgenommen und registriert werden.

Zur Festlegung des Koordinatensystems bei der Feldmessung bestehen zwei Möglichkeiten:
1. Abstecken einer Geraden vermessen von zwei Punkten auf dieser, die eine sinnvolle Ausrichtung des Koordinatensystems anbietet (z.B. eine parallele Straße, parallele Grundstücksgrenze).
2. Klassisches Einmessen in das vorhandene Koordinatensystem, indem ein in seinen absoluten Koordinaten bekannter Meßpunkt angezielt wird und eine Strecke in eine ebenfalls bekannte Richtung gelegt wird.

Bei der Feldmessung wird im Computer 4 eine weitere Liste von Objekten angeboten, die der Feldvermessung entsprechen wie z.B. Bäume, Grenzsteine, Zäune, Grundstücksgrenzen, Häuser.

Die aufgrund des beschriebenen Meßverfahrens attributierte und ausgemessene unmaßstäbliche Skizze kann wieder im Computer 4 zu einer maßstäblichen Zeichnung automatisch generiert werden, wo ebenfalls in einfacher Weise eventuelle Fehlmessungen zu erkennen sind.

Das Meßergebnis kann wiederum an ein CAD-System übergeben werden und dort entsprechend den vorhandenen Symbolen zu einer maßstäblichen Zeichnung generiert werden. Die 3-D-Koordinaten eines jeden Meßpunktes können in der Zeichnung an jeden Meßpunkt automatisch angetragen werden.

Die Erfindung ist nicht auf die hier beschriebenen Ausführungsbeispiele beschränkt. Vielmehr ist es möglich, durch Kombination und Modifikation der genannten Merkmale weitere Ausführungsbeispiele zu realisieren, ohne den Rahmen der Erfindung zu verlassen.

## Patentansprüche

1. Verfahren zur Flächen- und Raumvermessung unter Nutzung von Laserstrahlen,
dadurch gekennzeichnet, daß
- von einer zentralen Stelle im zu vermessenden Raum alle zu erfassenden Raum- und/oder Flächeneckpunkte mit einem Laserstrahl anvisiert und beaufschlagt werden,
- von dem jeweils reflektierten Laserstrahl aus der Entfernung und den Winkeln die 3D-Werte ermittelt und
- eine maßstabsgerechte Zeichnung erstellt wird.

2. Verfahren nach Anspruch 1,
dadurch gekennzeichnet, daß
vorab eine nichtmaßstäbliche Skizze mit den zu erfassenden Raum- und/oder Flächeneckpunkten erstellt wird und die Raum- und/oder Flächeneckpunkte nach dem Vermessen mit dem Laserstrahl und der Ermittlung und Speicherung der zugehörigen 3D-Werte eine andere Farbkennung erhalten.

3. Verfahren nach Anspruch 2,
dadurch gekennzeichnet, daß
die nichtmaßstäbliche Skizze auf die Bildfläche eines transportablen PC gezeichnet wird.

4. Verfahren nach Anspruch 1,
dadurch gekennzeichnet, daß
die Zeichnung in einem CAD-System weiterbearbeitet wird.

5. Verfahren nach Anspruch 1,
dadurch gekennzeichnet, daß
für flächenmäßige Raumdetails, wie für Fenster und Türen nur jeweils ein Meßpunkt oben und diagonal dazu unten erfaßt wird.

6. Verfahren nach Anspruch 1,
dadurch gekennzeichnet, daß
die gemessenen Objekte und Kanten noch Bedarf attributiert werden.

7. Verfahren nach Anspruch 1,
dadurch gekennzeichnet, daß
das Anvisieren direkt mit dem menschlichen Auge oder indirekt über ein Zielfernrohr erfolgt.

8. Vorrichtung zur Flächen- und Raumvermessung mit einem Laserentfernungsmesser mit sichtbarem Laserstrahl,
dadurch gekennzeichnet, daß
auf einem Stativ (1) der Laserentfernungsmesser (3), bestehend aus Lasersender und Laserempfänger, eine Kipp- und Dreheinrichtung (6) zur Ausrichtung und Winkelmessung für Hoch- und Rechstwert, eine elektronische Auswerteeinheit (2) zur Winkeldaten- und Entfernungsdatenerfassung- und übergabe und mindestens ein damit verbundener Computer (4) sowie ein Zielfernrohr (5) angeordnet ist.

9. Vorrichtung nach Anspruch 8,
dadurch gekennzeichnet,
daß der Computer (4) ein Notebook, ein Feldrechner oder ein Penbook ist.
